# EUROPEAN PATENT APPLICATION

(11) **EP 2 011 953 A1**
(43) Date of publication of application: **07.01.2009**
(21) Application number: 07791903.3
(22) Date of filing: 03.08.2007
(51) Int. Cl.: E06B 9/52

(54) **HOLDING MEMBER FOR WINDOW SCREEN**

(30) Priority: 07.08.2006 JP 2006214897
(71) Applicant: SEIKI HANBAI CO., LTD., Nerima-ku, Tokyo 1760014 (JP)
(72) Inventor: MORIYA, Masato, Tokyo 1760014 (JP); SASAKI, Fumio, Shizuoka-shi. Shizuoka 4228071 (JP)
(74) Representative: Findlay, Alice Rosemary
(86) International application number: PCT/JP2007/065229
(87) International publication number: WO 2008/018372

(57) **Abstract**

[Object] To provide a holding member for a net for a screen door effective for fixing a net for a screen door having fine filaments and a fine mesh compared with a known insect protection net to a frame body for use in a screen door.

[Solving Means] A holding member 14 is constructed by providing a pair of elastically deformable leg ridges 16 being fitted into a latch groove 18 under a condition of being in pressure contact with an inward projecting edge 19 thereof, to a cover plate 15 for covering the latch groove 18. A soft pressure-contact portion 15a being in pressure contact with the net 12 sandwiched between the same and an outer surface 19a of the inward projecting edge 19 of the latch groove 18 is integrally formed at an outer side of the leg ridge 16 of the cover plate 15. In the pressure-contact portion 15a, an acute head-shaped projecting ridge 15b being elastically in pressure contact with the net sandwiched between the same and the outer surface of the inward projecting edge 19 of the latch groove 18 is projected and the projecting ridge has elasticity so as to be deformed by unevenness of the net surface.

## Description

### Technical Field

The present invention relates to a holding member for a net for a screen door for fixing the net to a frame body by pushing the same into a latch groove of the frame body for a screen door together with the net for the screen door, and more particularly to a holding member for a net for a screen door appropriate for fixing the net for a screen door having a fine filament and a fine mesh compared with an existing multipurpose insect protection net to the frame body for use in the screen door.

### Background Art

In recent years, demand for a net for a screen door having an extremely fine mesh for preventing very small insects or fine dust from invading from an opening portion of a building has been increasing. In a case that the net is tightly stretched over a frame body for use in the screen door of a known insect screen door installed at the opening portion of the building, it is generally assumed that the aforementioned net is tightly stretched by pushing a known rubber-strap-shaped holding member for fixing the net for the screen door into a latch groove of the frame body.

However, the net having the aforementioned filament with a smaller fineness than that of a known insect protection net, and provided with the fine mesh has a thin texture. Hence, not only is the tear strength of the net lower than that of the known net, but also the mesh is fine than that of the known net, and therefore the surface of the net is inevitably smooth. Moreover the net is flexible, the friction force of the net on other objects is small, and the surface of the net is slippery. Therefore, there is a problem in which when the net is fixed to the frame body for use in the screen door using the known rubber-strap-shaped holding member, the net is not only unable to be stretched without causing a crease, but is also easily pulled out when an external force is applied to the tightly stretched net because the net is slippery compared with the known net, or in which the net is disengaged from the latch groove together with the holding member.

Further, since the net is thin and tends to be easily damaged, if an external force is applied from the holding member to the net in a locally concentrated manner when the net is fixed to the frame body for use in the screen door using the holding member, there is a possibility that the net is damaged.

### Disclosure of Invention

Technical problems of the present invention are enabling a known insect protection net to be easily, assuredly, and stably fixed to a frame body for use in a screen door as a matter of course, and specifically providing a holding member for a net for a screen door effective for fixing a net for a screen door having a fine filament and a fine mesh compared with the aforementioned insect protection net, namely, a net whose tear strength is low and surface is slippery, to the frame body for use in the screen door.

Other technical problems of the present invention are providing a holding member for a net for a screen door, capable of fixing a net without locally applying a large external force from the holding member to the net in a concentrated manner, and without damaging or breaking the net when fixing the same to the frame body for use in the screen door using the holding member.

### Means for Solving the Problems

In order to solve the above-described problems, the present invention is characterized in that in a holding member made of synthetic resin for fixing a net by being pushed into a latch groove formed by narrowing a mouth portion by inward projecting edges at inner periphery sides of one surface along which the net is tightly stretched in a rectangular frame body for use in a screen door, together with a net for the screen door, the holding member is constructed by being provided with an elastically deformable leg portion to be fitted into the latch groove under a condition of being in pressure contact with the inward projecting edge thereof on a cover plate for covering the latch groove, and a soft pressure-contact portion to come in pressure contact with the net sandwiched between the same and an outer surface of the inward projecting edge in the latch groove is integrally formed on an outer side of the leg portion of the cover plate, and an acute tip end-shaped projecting ridge elastically comes in pressure contact with the net sandwiched between the same and the outer surface of the inward projecting edge of the latch groove is projected on the pressure-contact portion, and the projecting ridge is provided with elasticity so as to be deformed by unevenness of the net surface.

In accordance with the holding member for the net for the screen door having the aforementioned construction, when the net is fixed by pushing the leg portion of the aforementioned holding member into the latch groove of the frame body for use in the screen door, the net appropriately slides along the outer side of the leg portion and appropriate tension is applied to the net, and since the soft pressure-contact portion of the aforementioned cover plate is elastically brought into pressure contact with the net while being deformed by unevenness of the aforementioned net surface at the step when a final fixing operation is substantially completed, a sliding movement of the net in the latch groove is suppressed by friction force between the pressure-contact portion and the net, and the net is able to be easily, assuredly, and stably fixed to the frame body for use in the screen door.

When the latch groove of the aforementioned frame body for use in the screen door is provided with a narrowed mouth portion between a pair of inward projecting edges that face each other, the aforementioned leg portion is formed with a pair of elastically deformable leg ridges to be fitted into the latch groove under a condition of being in pressure contact with the inward projecting edges on both sides of the mouth portion via the net, and the pair of leg ridges include slope portions to be in pressure contact with tip ends of the inward projecting edges of the latch groove via the aforementioned net when being pushed into the aforementioned latch groove on the outer sides of the tip end portions. Further, the pair of leg ridges are each provided with a latch projection including a latch edge for latching the holding member to the inner side of the aforementioned projecting edge via the aforementioned net in completion of pushing the aforementioned holding member into the latch groove. The latch edge of the aforementioned latch projection is formed on a slope portion on a backside of the aforementioned slope portion on the outer side of the tip end portion of the latch projection.

That is, since the outer side of the tip end portion of the aforementioned pair of leg ridges is formed so as to have a smooth-mountain shape made up of the slope portion of the outer side of the tip end portion of the aforementioned latch projection and the slope portions of the latch edge, the net is allowed to have an appropriate sliding movement along both the aforementioned slope portions on the outer side of the tip end portion of both the leg ridges when the leg portion of the aforementioned holding member is pushed into the latch groove of the frame body for use in the screen door, and the net is fixed, therefore there is no possibility that an external force can be locally applied from the aforementioned holding member to the net in a concentrated manner, and an appropriate tension force can be applied to the net, and further the net can be fixed to the aforementioned frame body for use in the screen door without damaging or breaking the net. In addition, at a time point when the operation for pushing the holding member into the aforementioned latch groove is substantially completed, a slope-shaped latch edge comes in pressure contact with the inward projecting edge of an opening via the net, and sandwiches the aforementioned inward projecting edge and the net between the same and the aforementioned soft pressure-contact portion. Therefore, the aforementioned holding member is stably held at the mouth portion of the latch groove under the fixed condition of the net.

On the other hand, when the latch groove of the aforementioned frame body for use in the screen door is provided with a mouth portion narrowed between an inner peripheral plane of the frame body for use in the screen door and the inward projecting edge facing thereto, the aforementioned leg portion is constructed with an elastically deformable leg ridge to be fitted into the latch groove under a condition of pressure contact with the inward projecting edge projecting on the inner peripheral plane side via the net, and the contact plate portion for holding an inserted state while being in contact with the inner peripheral plate of the aforementioned frame body for use in the screen door. The aforementioned leg ridge is provided with a slope portion on the outer side of the tip end portion thereof to be in pressure contact with the tip end of the inward projecting edge of the latch groove via the net when the same is pushed into the aforementioned latch groove. In addition, the leg ridge is provided with a latch projection having a latch edge to be latched to the inner side of the aforementioned projecting edge via the net when the pushing operation for the aforementioned holding member into the latch groove is completed, and the latch edge of the aforementioned latch projection is formed on a slope portion at the backside of the aforementioned slope portion on the outer side of the tip end portion of the latch projection.

Further, it is preferable that at least one projecting ridge to be deformed by an operation so as to be in pressure contact with the aforementioned net is respectively provided on the pressure contact portion of the aforementioned cover plate. The aforementioned acute tip end-shaped projecting ridge is, preferably, formed to have a height in which when the leg ridge is pushed into the latch groove without allowing the net to intervene, and a latch edge of the leg ridge is latched inside an inward projecting edge of the latch groove, a tip end of the projecting ridge comes in contact with an outer surface of the aforementioned inward projecting edge.

Furthermore, in order to avoid damage to the net and the holding member, a thin-walled elastic deforming portion is formed between coupling portions with the pair of leg ridges, or between the coupling portions of the leg ridge and the contact plate portion at a center portion of the cover plate for covering the latch groove.

### Advantages

In accordance with the holding member for the net for the screen door according to the present invention as described above in detail, of course the known insect protection net can stably be fixed to a frame body for use in a screen door, and a net for a screen door having a fine filament and a fine mesh compared with the insect protection net can easily, assuredly, and stably be fixed to a frame body for use in a screen body. In addition, when the net is fixed to the frame body for use in the screen door with the holding member, there is no possibility that external force is applied to the net from the holding member in a locally concentrated manner, and the net can be fixed without damaging and breaking the same.

### Best Mode for Carrying Out the Invention

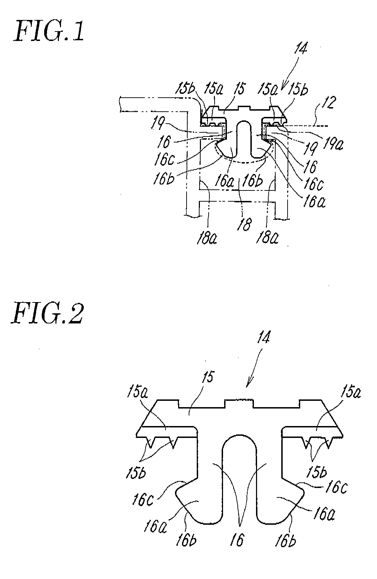

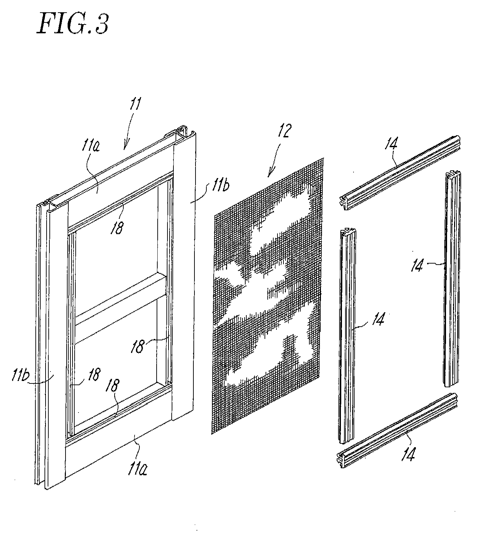

Fig. 1 through Fig. 4 illustrate a first embodiment when a holding member for a net for a screen door according to the present invention is applied to fix a net to an insect screen door. The insect screen door is to be disposed at an opening portion of a building, such as a window frame or the like, in a fixed manner or a slidable manner.

The aforementioned screen door is provided with a screen-door-use frame body 11 being formed of a rectangular shape with aluminum-made lateral frame members 11a and longitudinal frame members 11b forming four sides, an insect protection net 12 being tightly stretched over the frame body 11, and a holding member 14 for fixing the net 12 to the frame body 11. The aforementioned insect protection net 12 is formed to have a fine mesh compared with a known insect protection net using a filament of a polyester fiber or a polypropylene fiber or the like having a smaller fineness than that of the known insect protection net by texturing the same into a plain fabric or a Russell fabric.

In the lateral frame members 11a and longitudinal frame members 11b forming the aforementioned frame body 11, latch grooves 18 are formed at concave step portions formed on inner periphery sides of one surface along which the net is tightly stretched. The latch groove 18 is formed such that a mouth portion thereof is narrowed by means of a left-and-right pair of inward projecting edges 19. Further, the aforementioned insect protection net 12 is pushed into the latch groove 18 together with the aforementioned holding member 14 under a condition in which the insect protection net 12 is mounted on one surface of the frame body 11 along which the net is tightly stretched and to which the latch groove 18 is provided, and thus the insect protection net 12 is tightly stretched over the frame body 11.

The aforementioned holding member 14 is formed of synthetic resin using a push-out molding method, and, as is clearly illustrated in Fig. 1 and Fig. 2, the holding member 14 is formed so as to have a cover plate 15 for covering the latch groove 18 integrally provided with leg portions, i.e., a pair of elastically deformable leg ridges 16 to be fitted into the latch groove 18 under a condition where tip end portions thereof are in pressure contact with the inward projecting edges 19. Further, a pair of pressure-contact portions 15a formed of synthetic resin softer than the cover plate 15 and the leg ridge 16 and integrally formed with the cover plate 15 are formed on both outer sides of the leg ridges 16 of the aforementioned cover plate 15. In the pressure-contact portions 15a, a pair of acute tip end-shaped projecting ridges 15b being elastically in pressure contact with the aforementioned net 12, which is sandwiched between the pressure-contact portions 15a and outer surfaces 19a of the inward projecting edges 19 of the aforementioned latch groove 18, are respectively projected.

Furthermore, in the aforementioned pair of leg ridges 16, a slope portion 16b being brought into contact with a tip end of the inward projecting edge 19 of the latch groove 18 when the leg ridge 16 is pushed into the aforementioned latch groove 18 is provided on the outer side of the tip end portion of the pair of leg ridges 16. In addition, a latch projection 16a having a latch edge 16c to be latched to an inside of the aforementioned projecting edge 19 when an operation for pushing the holding member 14 into the latch groove 18 is completed is provided. The latch edge 16c of the latch projection 16a is formed at a slope at the backside of the aforementioned slope 16b on the outside of the tip end portion of the latch projection 16a. Thereby, the latch projection 16a is entirely formed so as to have a smooth-mountain shape facing an inside wall 18a of the aforementioned latch groove 18 when a pushing operation for the latch projection 16a into the aforementioned latch groove 18 is completed.

When the insect protection net 12 is tightly stretched over the aforementioned frame body 11 for use in the aforementioned screen door using the above-described holding member 14 for the net for the screen door, firstly the insect protection net 12 is mounted on the frame body 11 and then the holding member 14 is placed on the insect protection net 12 on one of the latch grooves 18, and the net 12 is pushed toward the latch groove 18 with the holding member 14. Thereby, the slope portion 16b of the latch projection 16a of the holding member 14 is brought into contact with the tip end of the inward projecting edge 19 of the latch groove 18 via the net 12 and is pushed thereinto by a pressing force applied to the holding member 14 while the leg ridge 16 of the holding member 14 is inwardly and elastically deformed. When an entire latch projection 16a of the leg ridge 16 passes through the inside of the inward projecting edge 19 of the latch groove 18, the leg ridge 16 substantially returns to an original shape, and the aforementioned latch edge 16c is latched to the inner side of the inward projecting edge 19 of the latch groove 18 via the net 12, and the holding member 14 is prevented from being pulled out. Moreover, at a step when a final fixing operation is substantially completed, the soft projecting ridge 15b projecting on the pressure-contact portion 15a of the cover plate 15 of the holding member 14 is elastically in pressure contact with the net 12 while being deformed by the unevenness of the surface of the aforementioned net 12. Thereby, the net 12 is sandwiched between the pressure-contact portion 15a of the cover plate 15 and the outer surface 19a of the inward projecting edge 19. Hence, a sliding movement of the net 12 is suppressed by means of friction force between the projecting ridge 15b and the net 12, and the net 12 can be stably fixed.

Currently, since the latch projection 16a of the leg ridge 16 is formed so as to have a smooth-mountain shape made up of the slope portion 16b of the aforementioned latch projection 16a on the outer side of the tip end portion of the leg ridge 16 of the holding member 14, and the slope portion of the latch edge 16c, the aforementioned net 12 is allowed to have an appropriate sliding movement relative to the latch projection 16a when the aforementioned holding member 14 is pushed into the latch groove 18. Hence, there is no possibility that an external force can be locally applied to the net 12 in a concentrated manner, and the net 12 can be sandwiched between the tip end of the inward projecting edge 19 and the slope portion of the latch edge 16c of the aforementioned leg ridge 16 without damaging or breaking the net 12.

In addition, at a time point when the operation for pushing the holding member 14 into the aforementioned latch groove 18 is substantially completed, the slope-shaped latch edge 16c is brought into pressure contact with the inward projecting edge 19 of an opening via the net 12, and the aforementioned inward projecting edge 19 and the net 12 are sandwiched between the aforementioned soft pressure-contact portion 15a and the same. Therefore, under a fixed condition of the net 12, the aforementioned holding member 14 is stably held at the mouth portion of the latch groove 18.

By the thus described tight stretching operation, the aforementioned net 12 is able to be easily and assuredly tightly stretched under a tension condition to the screen-door-use frame body 11, and even when some external force is applied thereto after the tight stretching operation, there is no possibility that the net 12 slides resulting in the formation of creases, and the net 12 is able to be stably fixed.

Further, upon performing the fixing operation for the net 12 using the holding member 14 for the four sides of the frame body 11, an end portion of the insect protection net 12 on outside of the holding member 14 is cut off and thereby the tight stretching operation performed therefor is completed.

As described above in detail, a net for a screen door having a fine filament and a fine mesh compared with the insect protection net, namely, the net 12 whose tear strength is low and the surface of which is slippery is able to be easily, assuredly, and stably fixed to the screen-door-use frame body 11, and in addition, when the net 12 is fixed to the screen-door-use frame body 11 using the holding member 14, there is no possibility that the external force can not be locally applied to the net 12 in the concentrated manner, and the same can be fixed without damaging or breaking the net 12.

Incidentally, the pressure-contact portion 15a of the aforementioned cover plate 15 is not limited to being provided on both the outer sides of the aforementioned pair of leg ridges 16, and is able to have a configuration in which it is provided only on the outer side of either one of the leg ridges 16. Furthermore, the projecting ridge 15b projecting from the pressure-contact portion 15a of the aforementioned cover plate 15 is also able to have a configuration in which it is provided only on one side pressure-contact portion 15a, and is not limited to being provided on both side pressure-contact portions 15a. Moreover, the projecting ridge 15b is not limited to that of the above-described pair, and is able to be appropriately increased or decreased in number corresponding to the fineness of the mesh of the net (slipperiness of the net).

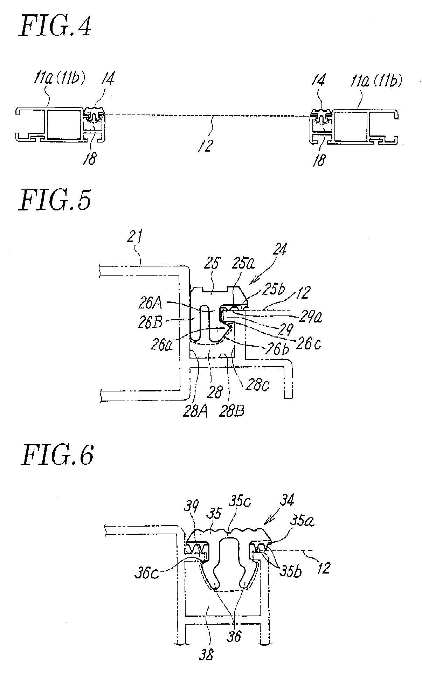

Currently, in the above-described first embodiment, although the aforementioned holding member 14 is constructed such that the same is provided with a pair of elastically deformable leg ridges 16 being fitted into the inward projecting edges 19 that respectively project from both sides of the mouth portion of the latch groove 18 under a condition of being in pressure contact therewith, in a second embodiment illustrated in Fig. 5, a holding member 24 being pushed into the latch groove 28 together with the net 12 is constructed for a cover plate 25 for covering the latch groove 28 to be integrally provided with a leg ridge 26A in a single ridge being elastically deformable, fitting into the latch groove 28 under a condition of being in pressure contact with an inward projecting edge 29, and a contact plate portion 26B in a single ridge that maintains an inserted state while being in contact with an inner peripheral plane 28A of the aforementioned frame body 21 for use in the screen door, so as to correspond to a case in which the latch groove 28 of a frame body 21 for use in a screen door is constituted by the inner peripheral plane 28A of the frame body 21 for use in the screen door, a groove bottom forming projecting piece 28B inwardly projecting from the inner peripheral plane 28A, a groove side wall 28C projecting in parallel with the aforementioned inner peripheral plane 28A from the projecting piece 28B, and the inward projecting edge 29 projecting on a side of the aforementioned inner peripheral plane 28A from a tip end portion of the groove side wall 28C, while forming a narrowed mouth portion.

In the aforementioned holding member 24, a pressure-contact portion 25a integrally formed with the cover plate 25 with synthetic resin softer than the cover plate 25 and the leg ridge 26A is formed on an outside of the leg ridge 26A of the cover plate 25. In the pressure-contact portion 25a, a pair of acute tip end-shaped projecting ridges 25b being elastically in pressure contact with the aforementioned net 12, which is sandwiched between the pressure-contact portion 25a and an outer surface 29a of the inward projecting edge 29 of the aforementioned latch groove 28, are projected. The projecting ridge 25b is formed in a manner such that an acute tip end-shaped top portion is deviated to be on a side of the aforementioned leg ridge 26A.

Moreover, in the aforementioned leg ridge 26A, a slope 26b being brought into contact with a tip end of the aforementioned inward projecting edge 29 when the leg ridge 26A is pushed into the aforementioned latch groove 28 is provided on an outer side of a tip end portion of the leg ridge 26. In addition, a latch projection 26a having a latch edge 16c to be latched to an inner side of the aforementioned projecting edge 29 when an operation for the aforementioned holding member 24 to be pushed into the latch groove 28 is completed is provided. A latch edge 26c of the latch projection 26a is formed at a slope at the backside of the aforementioned slope 26b on the outer side of the tip end portion of the latch projection 26a.

On the other hand, the aforementioned contact plate portion 26B is configured to hold an inserted state by contacting the inner peripheral plane 28A of the aforementioned frame body 21 for use in the screen door, and in the second embodiment, the same is formed so as to be a portion having a planar shape. However, the contact plate portion 26B can be formed so as to be brought into contact with the aforementioned inner peripheral plane 28A at a projecting portion by providing at least one projecting portion that is in contact with the inner peripheral plane 28A at a surface on a side where the contact plate portion 26B is in contact with the inner peripheral plane 28A of the aforementioned frame body 21. Thereby, the state of the contact plate portion 26B can be further stabilized.

In the holding member 24 having the aforementioned construction, at a step when a final fixing operation is substantially completed, when the holding member 24 is pushed into the latch groove 28 of the aforementioned frame body 21 together with the net 12, since a surface on the aforementioned leg ridge 26A side at the projecting ridge 25b whose contact angle to the net 12 is approximately 90°C is elastically in pressure contact with the net 12 while being deformed due to unevenness of the surface of the aforementioned net 12, the sliding movement of the net 12 in the latch groove 28 is further preferably suppressed by means of the friction force between the projecting ridge 25b and the net 12, and the net 12 can be stably fixed.

In addition, since the latch projection 26a of the aforementioned leg ridge 26A is formed so as to have a smooth mountain shape made up of the slope portion 26b of the latch projection 26a and a slope portion of the latch edge 26c, when the aforementioned holding member 24 is pushed into the latch groove 28, the aforementioned net 12 is allowed to have appropriate sliding movement relative to the latch projection 26a. Hence, there is no possibility that an external force can be locally applied to the net 12 in a concentrated manner, and the net 12 can be sandwiched between the tip end of the inward projecting edge 29 of the aforementioned latch groove 28 and the slope portion 26b of the latch projection 26a and the slope portion of the latch edge 26c at the groove side wall 25 and the aforementioned leg ridge 26A without damaging or breaking the net 12.

Incidentally, constructions and operations of the second embodiment other than those described above are substantially similar to those of the aforementioned first embodiment and therefore explanation thereof is omitted.

Fig. 6 illustrates a third embodiment of the holding member according to the present invention, and compared with the holding member 14 of the first embodiment, the entirety of the holding member 34 of the third embodiment has thin walls, walls becoming increasingly thin toward the tip end thereof, so as to increase elastic flexibility of a pair of leg ridges 36. Further, a thin-walled elastic deforming portion 35c is formed at a center portion of a cover plate 35 that covers a latch groove 38, and between coupling portions of a pair of leg ridges 36, and thereby the elastic flexibility of a pair of the leg ridges 36 is increased and damage to the net 12 is suppressed and at the same time, damage to the leg ridge 36 or the like of the holding member 34 is configured so as to be suppressed. Such an elastic deforming portion of the cover plate may also be provided between coupling portions of the leg ridge 26A and the contact plate portion 26B of the holding member 24 in the aforementioned second embodiment.

Furthermore, in the holding member 34 in the third embodiment, an acute head-shaped projecting ridge 35b projecting on a pressure-contact portion 35a and formed of soft synthetic resin, and integrally provided with the aforementioned cover plate 35 is formed to have a height in which when the aforementioned leg ridge 36 is pushed into the latch groove 38 without allowing the net 12 to intervene, and a latch edge 36c of the leg ridge 36 is latched inside an inward projecting edge 39 of the latch groove 38, a tip end of the projecting ridge 35b comes in contact with an outer surface of the aforementioned inward projecting edge 39. Preferably, the projecting ridges 15b and 25b in the aforementioned first and second embodiments are also formed to have the above-described height.

Incidentally, the constructions and operations of the third embodiment other than the above-described are substantially similar to those of the aforementioned first embodiment and therefore explanation thereof is omitted.

Currently, as described above, although the holding member for the net for the screen door according to the present invention is specifically effective when the net for the screen door having a fine filament and a fine mesh compared with the known insect protection net is fixed to the frame body for use in the screen door, there is no need to claim that it is also effective when the known insect protection net is fixed to the frame body for use in the screen door.

### Brief Description of the Drawings

Fig. 1 is a cross-sectional view illustrating a condition where a holding member for a net for a screen door according to a first embodiment of the present invention is attached to a latch groove by insertion;
Fig. 2 is a cross-sectional view illustrating the net for the screen door according to the same embodiment;
Fig. 3 is an exploded perspective view illustrating a condition where the holding member of the same embodiment is applied to an insect screen door;
Fig. 4 is a plan cross-sectional view illustrating the aforementioned insect screen door;
Fig. 5 is a cross-sectional view illustrating a condition where a holding member for a net for a screen door according to a second embodiment of the present invention is attached to a latch groove by insertion; and
Fig. 6 is a cross-sectional view illustrating a condition where a holding member for a net for a screen door according to a third embodiment of the present invention is attached to a latch groove by insertion.

### Reference Numerals

- 11, 21: frame body for use in a screen door
- 12: insect protection net
- 14, 24, 34: holding member
- 15, 25, 35: cover plate
- 15a, 25a, 35a: pressure-contact portion
- 15b, 25b, 35b: projecting ridge
- 16, 26A, 36: leg ridge
- 26B: contact plate portion
- 16a, 26a: latch projection
- 16b, 26b: slope portion
- 16c, 26c, 36c: latch edge
- 18, 28, 38: larch groove
- 19, 29: inward projecting edge
- 28A: inner peripheral plane
- 28B: groove bottom forming projecting piece
- 28C: groove side wall

## Claims

1. A holding member for a net for a screen door made of synthetic resin, for fixing a net by being pushed into a latch groove formed by narrowing a mouth portion by an inward projecting edge at an inner periphery of one surface along which the net is tightly stretched in a rectangular frame body for use in a screen door, together with a net for the screen door,
wherein the holding member is constructed by being provided with an elastically deformable leg portion to be fitted to the latch groove under a condition of being in pressure contact with the inward projecting edge on a cover plate for covering the latch groove, and
wherein a soft pressure-contact portion to come in pressure contact with the net sandwiched between the same and an outer surface of the inward projecting edge in the latch groove is integrally formed on an outer side of the leg portion of the cover plate, and
wherein an acute tip end-shaped projecting ridge elastically comes in pressure contact with the net sandwiched between the same and the outer surface of the inward projecting edge of the latch groove is projected on the pressure-contact portion, and
wherein the projecting ridge has elasticity so as to be deformed by unevenness of a net surface.

2. The holding member for a net for a screen door according to Claim 1, wherein the frame body for use in the screen door comprises the latch groove comprising a narrowed mouth portion between a pair of confronting inward projecting edges,
wherein the leg portion is constructed of a pair of elastically deformable leg ridges fitted into the latch groove under a condition of being in pressure contact with inward projecting edges, respectively, on both sides of the mouth portion via the net, and
wherein the pair of leg ridges respectively comprises slope portions to come in pressure contact with tip ends of the inward projecting edges of the latch groove when being pushed into the latch groove on outer sides of the tip end portions via the net, and wherein latch projections provided with latch edges for latching the holding member inside the projecting edge via the net when the operation for pushing the holding member into the latch groove is completed are respectively provided, and
wherein the latch edge of the latch projection is formed on a slope portion on a backside of the slope portion on the outer side of the tip end portion of the latch projection.

3. The holding member for a net for a screen door according to Claim 1, wherein the frame body for use in the screen door comprises the latch groove comprising a narrowed mouth portion between an inner peripheral plane of the frame body for use in the screen door and an inward projecting edge opposite thereto,
wherein the leg portion is constructed of an elastically deformable leg ridge being fitted into the inward projecting edge under a condition of being in pressure contact therewith via the net, and a contact plate portion for holding an inserted state while being in contact with the inner peripheral plane of the frame body for use in the screen door, and
wherein the leg ridge comprises the slope portion being in pressure contact with a tip end of the inward projecting edge of the latch groove via the net when being pushed into the latch groove on an outer side of the tip end portion, and comprises a latch projection including a latch edge to be latched with an inside of the projecting edge via the net in completion of pushing the holding member into the latch groove, and
wherein the latch edge of the latch projection is formed on the slope portion on the backside of the slope portion on the outside of the tip end portion of the latch projection.

4. The holding member for a net for a screen door according to any one of Claims 1 through 3, wherein an acute tip end-shaped projecting ridge being elastically deformed by being in pressure contact with the net is provided in the pressure contact portion of the cover plate, in at least one in number.

5. The holding member for a net for a screen door according to any one of Claims 1 through 4, wherein the acute tip end-shaped projecting ridge projecting on the pressure contact portion is formed to have a height wherein when the leg ridge is pushed into the latch groove without allowing the net to intervene, and a latch edge of the leg ridge is latched inside an inward projecting edge of the latch groove, a tip end of the projecting ridge comes in contact with an outer surface of the inward projecting edge.

6. The holding member for a net for a screen door according to any one of Claims 1 through 5, wherein a thin-walled elastic deforming portion is formed at a center portion of a cover plate covering a latch groove, and between coupling portions of a pair of leg ridges, or between coupling portions of the leg ridge and the contact plate portion.
